# FASCICULE DE BREVET EUROPEEN

(11) **EP 3 394 970 B1**
(45) Date de publication et mention de la délivrance du brevet: **21.04.2021**
(21) Numéro de dépôt: 16815896.2
(22) Date de dépôt: 07.12.2016
(51) Int. Cl.: H02M 1/32, H02H 7/06, H02M 7/219, H02P 9/10

(54) **DISPOSITIF DE CONTRÔLE D'UN CONVERTISSEUR DC/DC EN PRÉSENCE D'UNE SURTENSION OU SOUS-TENSION DANS UN CIRCUIT ÉLECTRIQUE**
STEUERUNGSVORRICHTUNG BEI GLEICHSTROMSUMWANDLER BEI ÜBERSPANNUNG ODER UNTERSPANNUNG BEI EINER ELEKTRISCHEN SCHALTUNG
DC/DC CONVERTER CONTROL DEVICE WHEN OVERVOLTAGE OR UNDERVOLTAGE OCCURS IN AN ELECTRICAL CIRCUIT

(30) Priorité: 21.12.2015 FR 1562921
(43) Date de publication de la demande: 31.10.2018
(73) Titulaire: PSA Automobiles SA, 78300 Poissy (FR)
(72) Inventeur: COUTO DA COSTA, Antonio, 78400 Chatou (FR); BOUCLY, Bernard, 78150 Le Chesnay (FR)
(74) Mandataire: Jeannin, Laurent Jean-Pierre
(86) Numéro de dépôt international: PCT/FR2016/053255
(87) Numéro de publication internationale: WO 2017/109323

(56) Documents cités:
- FR-A1- 2 996 374

## Description

L'invention concerne les circuits électriques qui comprennent un convertisseur de type DC/DC, et éventuellement à découpage.

Dans certains domaines, comme par exemple celui des véhicules (éventuellement automobiles), on utilise des circuits électriques ayant un générateur de courant, comme par exemple un moteur électrique ou un alternateur, connecté en parallèle à un premier stockeur d'énergie électrique, un réseau de consommation comportant au moins un organe consommateur d'énergie électrique et connecté en parallèle à un second stockeur d'énergie électrique, et un convertisseur de type DC/DC monté en série entre, d'une part, le générateur de courant et le premier stockeur d'énergie électrique, et, d'autre part, le second stockeur d'énergie électrique et le réseau de consommation.

Comme le sait l'homme de l'art, en cas de détection d'une surtension ou d'une sous-tension dans un circuit électrique de ce type, le convertisseur de type DC/DC est agencé de manière à cesser de fournir de la puissance au réseau de consommateurs très rapidement (typiquement entre une dizaine de microsecondes et quelques millisecondes). A cet effet, il peut par exemple comprendre, sur son entrée et sur sa sortie, des interrupteurs de sécurité à base de composants MOSFET.

Cette cessation de fourniture de puissance permet d'éviter un endommagement de certains organes consommateurs d'énergie électrique. Cependant, le véhicule se retrouve subitement avec une perte totale d'alimentation de ses organes consommateurs d'énergie électrique, y compris ceux dits sécuritaires, ce qui peut s'avérer (très) dangereux. On comprendra en effet qu'un arrêt de fonctionnement de l'éclairage extérieur ou de la direction assistée ou du correcteur électronique de trajectoire (ou ESP) ou encore du système de déclenchement des « airbags » peut être dangereux dans certaines circonstances.

On connaît par le document FR2996374 un réseau électrique pour véhicule automobile comportant: un premier sous-réseau électrique, ledit premier sous-réseau électrique comportant en parallèle un générateur électrique, un premier stockeur d'énergie, au moins un premier consommateur électrique ; un deuxième sous-réseau électrique, ledit deuxième sous-réseau électrique comportant en parallèle un second stockeur d'énergie, un second consommateur électrique, un troisième consommateur électrique ; un convertisseur continu-continu, configuré pour charger le second stockeur d'énergie à partir du premier sous-réseau.

L'invention a donc notamment pour but d'améliorer la situation.

Elle propose notamment à cet effet un dispositif de contrôle destiné à faire partie d'un circuit électrique comprenant un générateur de courant connecté en parallèle à un premier stockeur d'énergie électrique, un réseau de consommation comportant au moins un organe consommateur d'énergie électrique et connecté en parallèle à un second stockeur d'énergie électrique, et un convertisseur de type DC/DC monté en série entre, d'une part, le générateur de courant et le premier stockeur d'énergie électrique, et, d'autre part, le second stockeur d'énergie électrique et le réseau de consommation.

Ce dispositif de contrôle se caractérise par le fait qu'il comprend des moyens de contrôle agencés :
- en cas de détection d'une surtension ou d'une sous-tension dans le circuit électrique, pour faire fonctionner le convertisseur pendant une première durée dans un mode adapté à cette surtension ou sous-tension détectée et dans lequel il délivre une puissance sensiblement identique à une puissance initiale qu'il délivrait avant la détection, et
- en cas de poursuite de la surtension ou sous-tension à l'expiration de cette première durée, pour faire fonctionner le convertisseur dans un mode dégradé dans lequel il délivre une puissance strictement inférieure à la puissance initiale.

Grâce à l'invention, on ne se retrouve pas subitement avec une perte totale d'alimentation électrique du circuit électrique, et les organes consommateurs d'énergie électrique ne risquent pas d'être endommagés.

Le dispositif de contrôle selon l'invention peut comporter d'autres caractéristiques qui peuvent être prises séparément ou en combinaison, et notamment :
- dans le mode dégradé la puissance délivrée peut être nulle ;
- ses moyens de contrôle peuvent être agencés pour choisir la première durée en fonction d'une valeur d'un écart entre la surtension détectée et une valeur maximale prédéfinie ou d'une valeur d'un écart entre la sous-tension détectée et une valeur minimale prédéfinie ;
   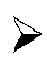 ses moyens de contrôle peuvent être agencés pour choisir une première valeur de la première durée lorsque la valeur d'écart est inférieure à un premier seuil, et une seconde valeur de la première durée strictement inférieure à cette première valeur lorsque la valeur d'écart est supérieure ou égale au premier seuil ;
   - la première valeur de la première durée peut être comprise entre 30 secondes et 3 minutes, et la seconde valeur de la première durée peut être comprise entre 200 millisecondes et 500 millisecondes;
- ses moyens de contrôle peuvent être agencés pour faire fonctionner le convertisseur pendant la première durée dans un mode adapté dans lequel la puissance qu'il délivre est fonction d'un couple (courant, tension) qui est défini par une loi prédéfinie ;
- ses moyens de contrôle peuvent être agencés, en cas de détection d'une surtension ou d'une sous-tension dans le circuit électrique, pour ordonner au générateur de courant de réduire une intensité en cours du courant qu'il produit et/ou au premier stockeur d'énergie électrique de cesser de fournir de l'énergie électrique et/ou au second stockeur d'énergie électrique de cesser de fournir de l'énergie électrique et/ou à au moins un organe consommateur d'énergie électrique de cesser de consommer de l'énergie électrique.

L'invention propose également un circuit électrique propre à équiper un système et comprenant :
- un générateur de courant connecté en parallèle à un premier stockeur d'énergie électrique, un réseau de consommation comportant au moins un organe consommateur d'énergie électrique et connecté en parallèle à un second stockeur d'énergie électrique,
- un convertisseur de type DC/DC monté en série entre, d'une part, le générateur de courant et le premier stockeur d'énergie électrique, et, d'autre part, le second stockeur d'énergie électrique et le réseau de consommation, et
- un dispositif de contrôle du type de celui présenté ci-avant.

Par exemple, une partie au moins des moyens de contrôle du dispositif de contrôle peut faire partie du convertisseur.

L'invention propose également un véhicule, éventuellement de type automobile, et comprenant au moins un circuit électrique du type de celui présenté ci-avant.

D'autres caractéristiques et avantages de l'invention apparaîtront à l'examen de la description détaillée ci-après, et des dessins annexés, sur lesquels :

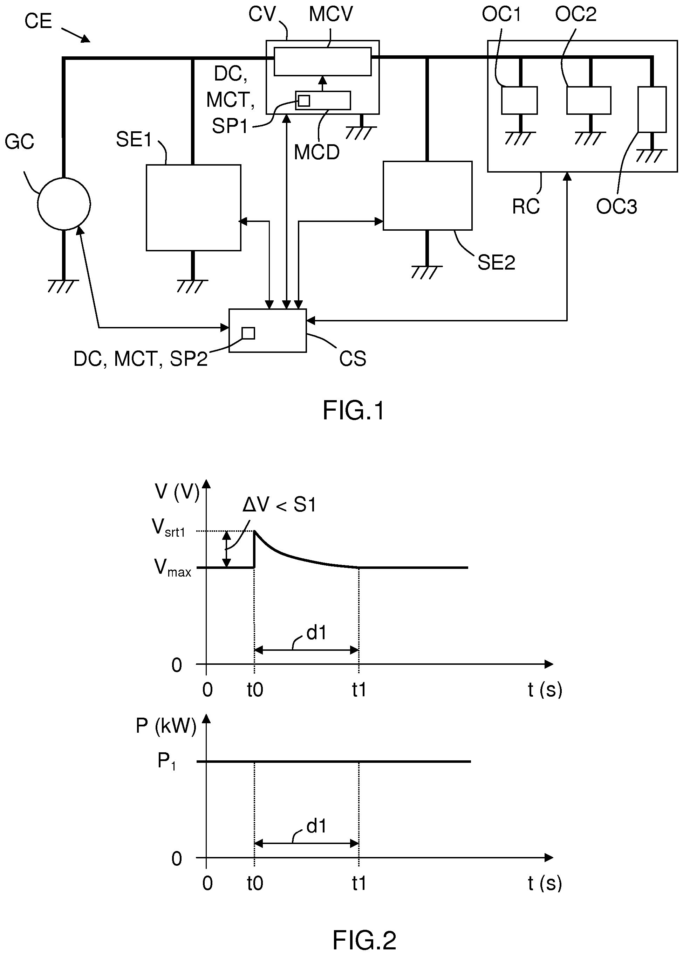

- la figure 1 illustre schématiquement et fonctionnellement un exemple de réalisation de circuit électrique comprenant un dispositif de contrôle selon l'invention,
- la figure 2 illustre schématiquement un premier diagramme d'évolution temporelle de la tension aux bornes d'un circuit électrique selon l'invention, montrant une surtension « moyenne » passagère, et un second diagramme d'évolution temporelle de la puissance fournie par le convertisseur DC/DC de ce circuit électrique en présence de cette évolution temporelle de la tension,

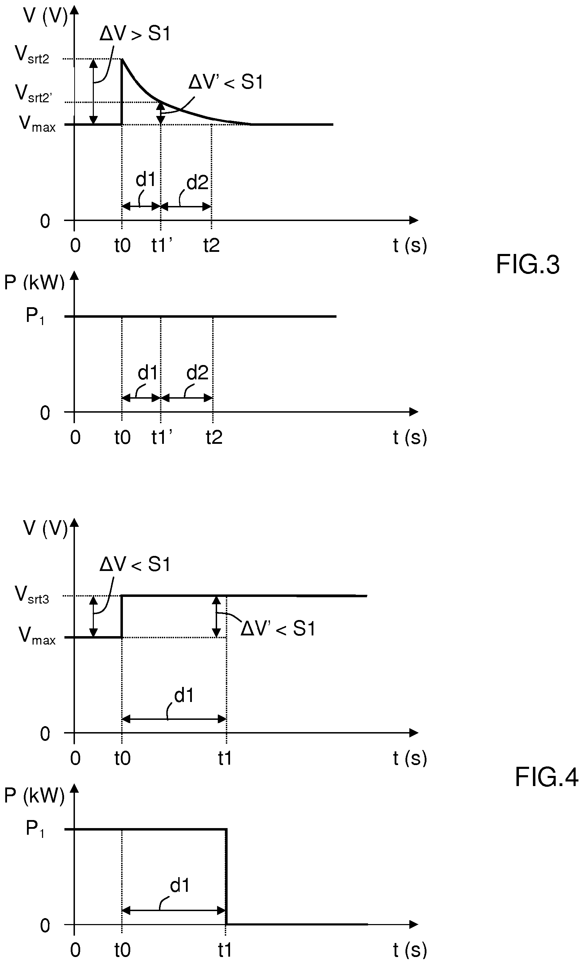

- la figure 3 illustre schématiquement un premier diagramme d'évolution temporelle de la tension aux bornes d'un circuit électrique selon l'invention, montrant une surtension « importante » passagère, et un second diagramme d'évolution temporelle de la puissance fournie par le convertisseur DC/DC de ce circuit électrique en présence de cette évolution temporelle de la tension,
- la figure 4 illustre schématiquement un premier diagramme d'évolution temporelle de la tension aux bornes d'un circuit électrique selon l'invention, montrant une surtension « moyenne » permanente, et un second diagramme d'évolution temporelle de la puissance fournie par le convertisseur DC/DC de ce circuit électrique en présence de cette évolution temporelle de la tension,

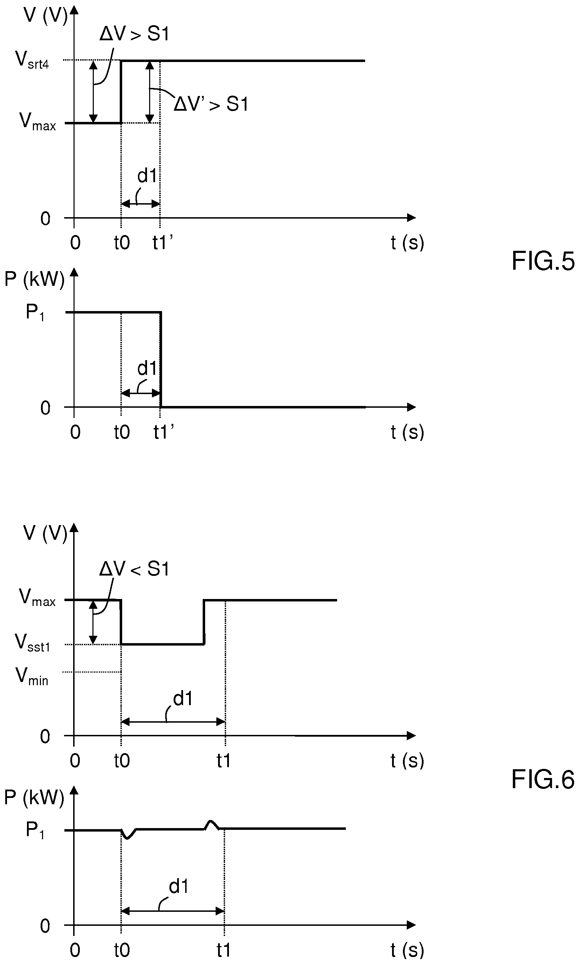

- la figure 5 illustre schématiquement un premier diagramme d'évolution temporelle de la tension aux bornes d'un circuit électrique selon l'invention, montrant une surtension « importante » permanente, et un second diagramme d'évolution temporelle de la puissance fournie par le convertisseur DC/DC de ce circuit électrique en présence de cette évolution temporelle de la tension,
- la figure 6 illustre schématiquement un premier diagramme d'évolution temporelle de la tension aux bornes d'un circuit électrique selon l'invention, montrant une sous-tension « moyenne » passagère, et un second diagramme d'évolution temporelle de la puissance fournie par le convertisseur DC/DC de ce circuit électrique en présence de cette évolution temporelle de la tension,

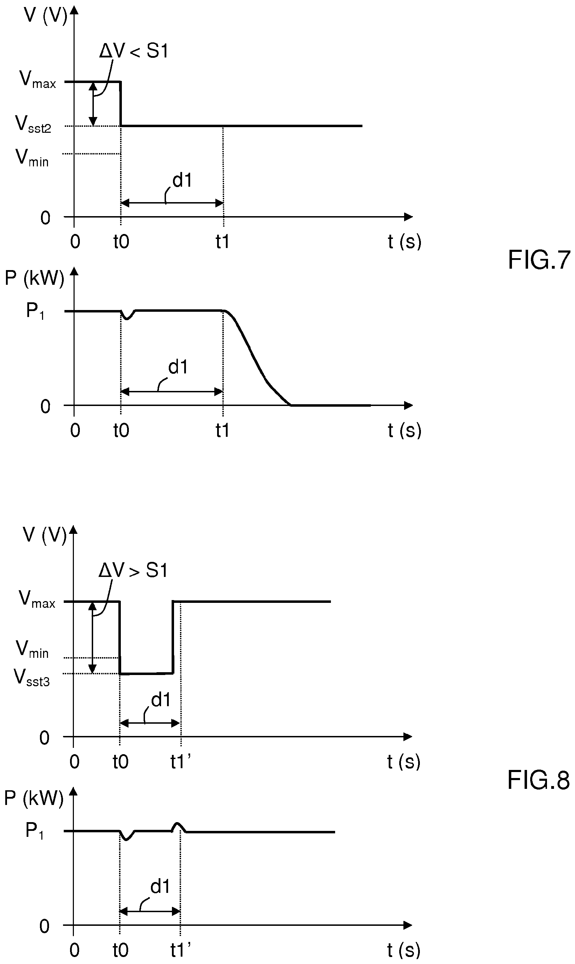

- la figure 7 illustre schématiquement un premier diagramme d'évolution temporelle de la tension aux bornes d'un circuit électrique selon l'invention, montrant une sous-tension « moyenne » permanente, et un second diagramme d'évolution temporelle de la puissance fournie par le convertisseur DC/DC de ce circuit électrique en présence de cette évolution temporelle de la tension,
- la figure 8 illustre schématiquement un premier diagramme d'évolution temporelle de la tension aux bornes d'un circuit électrique selon l'invention, montrant une sous-tension « importante » passagère, et un second diagramme d'évolution temporelle de la puissance fournie par le convertisseur DC/DC de ce circuit électrique en présence de cette évolution temporelle de la tension, et

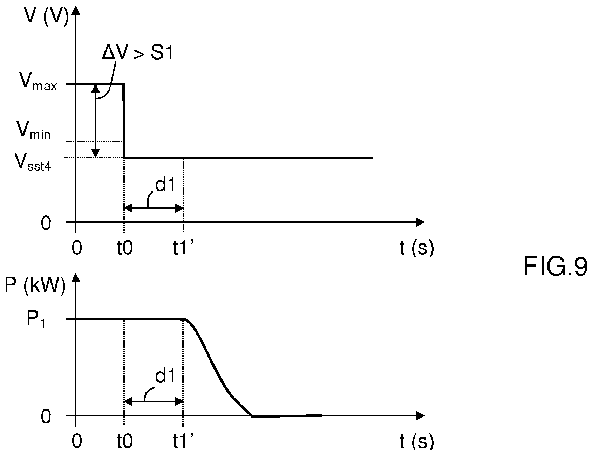

- la figure 9 illustre schématiquement un premier diagramme d'évolution temporelle de la tension aux bornes d'un circuit électrique selon l'invention, montrant une sous-tension « importante » permanente, et un second diagramme d'évolution temporelle de la puissance fournie par le convertisseur DC/DC de ce circuit électrique en présence de cette évolution temporelle de la tension.

L'invention a notamment pour but de proposer un dispositif de contrôle DC destiné à équiper un circuit électrique CE comportant au moins un générateur de courant GC, un réseau de consommation RC, un convertisseur CV de type DC/DC, et des premier SE1 et second SE2 stockeurs d'énergie électrique.

Dans ce qui suit, on considère, à titre d'exemple non limitatif, que le circuit électrique CE est destiné à équiper un véhicule, éventuellement de type automobile, comme par exemple une voiture. Mais l'invention n'est pas limitée à ce type d'application. En effet, le circuit électrique CE peut équiper n'importe quel type de système, et notamment les véhicules (terrestres, maritimes (ou fluviaux) et aériens), et les installations, y compris de type industriel (par exemple les systèmes de sauvegarde d'alimentation).

On notera que le véhicule peut, par exemple, être de type hybride ou tout électrique. On entend ici par « véhicule hybride » un véhicule comprenant un groupe motopropulseur comportant notamment une machine (ou moteur) électrique et un moteur thermique destinés à fournir de la puissance pour le déplacer. Par ailleurs, on entend ici par « véhicule tout électrique » un véhicule comprenant un groupe motopropulseur comportant au moins une machine (ou moteur) électrique destiné(e) à fournir de la puissance pour le déplacer.

On a schématiquement représenté sur la figure 1 un exemple non limitatif de circuit électrique CE selon l'invention. Comme illustré, un tel circuit électrique CE comprend au moins un générateur de courant GC, un réseau de consommation RC, un convertisseur CV de type DC/DC, des premier SE1 et second SE2 stockeurs d'énergie électrique, et un dispositif de contrôle DC selon l'invention.

Le réseau de consommation RC comporte au moins un organe OCj consommateur d'énergie électrique. A titre d'exemple non limitatif, un organe OCj peut être un calculateur, un capteur, un combiné d'affichage, des essuie-glaces, une direction assistée électrique, un système d'éclairage extérieur, un correcteur électronique de trajectoire (ou ESP), un système de déclenchement d'airbags, un turbo compresseur électrique, des suspensions électriques, un moteur (ou machine) électrique, ou un système de gestion des arrêts/démarrages d'un moteur. On notera que dans l'exemple non limitatif illustré sur la figure 1, le premier réseau de consommation RC comporte trois organes OC1 à OC3 (j = 1 à 3). Mais il peut comporter n'importe quel nombre d'organes consommateurs d'énergie électrique, dès lors que ce nombre est supérieur ou égal à un (1).

Le générateur de courant GC est connecté en parallèle au premier stockeur d'énergie électrique SE1. Dans le cas d'un véhicule, il s'agit par exemple d'un moteur (ou d'une machine) électrique du groupe motopropulseur ou d'un alternateur ou encore d'un alterno-démarreur. On notera que si le générateur de courant GC est un alternateur, alors le circuit électrique CE comprend également un démarreur monté en parallèle de l'alternateur GC.

Bien que cela n'apparaisse pas sur la figure 1, le circuit électrique CE pourrait, également et éventuellement, comprendre un autre réseau de consommation, d'une part, monté en parallèle entre le générateur de courant GC et le premier stockeur d'énergie électrique SE1, et, d'autre part, comportant au moins un organe consommateur d'énergie électrique (comme par exemple un compresseur de climatisation).

Le premier stockeur d'énergie électrique SE1 est connecté en parallèle au générateur de courant GC. Il s'agit, par exemple, d'une batterie principale, par exemple de type 300 V ou 48 V ou encore 24 V (et plus généralement de 12 V à 500 V), chargée de fournir de l'énergie électrique au réseau de consommation RC, ainsi qu'à l'éventuel autre réseau de consommation. A titre d'exemple, il peut comprendre plusieurs ultra-condensateurs (par exemple trois ou cinq), montés en série.

Le second stockeur d'énergie électrique SE2 est, par exemple, une batterie, par exemple de type 12 V ou 24 V (et plus généralement de 12 V à 48 V), chargée de fournir de l'énergie électrique au réseau de consommation RC, ainsi qu'à l'éventuel autre réseau de consommation (en cas de besoin). A titre d'exemple, il peut comprendre plusieurs ultra-condensateurs (par exemple trois ou cinq), montés en série.

Le convertisseur CV est de type DC/DC (« courant continu/courant continu »), et éventuellement à découpage. Il est monté en série entre, d'une part, le générateur de courant GC et le premier stockeur d'énergie électrique SE1, et, d'autre part, le second stockeur d'énergie électrique SE2 et le réseau de consommation RC. Il comprend des moyens de conversion MCV et des moyens de commande MCD.

Les moyens de conversion MCV sont propres à délivrer, en fonction de commandes définies par les moyens de commande MCD, de la puissance électrique pour le second stockeur d'énergie électrique SE2 et le réseau de consommation RC, à partir de l'énergie électrique fournie par le générateur de courant GC et/ou le premier stockeur d'énergie électrique SE1. On entend ici par « puissance électrique » un courant électrique choisi délivré sous une tension choisie. Ces moyens de conversion MCV comprennent essentiellement des circuits électroniques (ou « hardware »).

Les moyens de commande MCD sont chargés de définir des commandes de fonctionnement pour les moyens de conversion MCV, notamment en fonction d'instructions fournies par un calculateur de supervision CS. Ils peuvent être réalisés sous la forme de modules logiciels (ou informatiques ou encore « software ») et/ou d'une combinaison de circuits électroniques (ou hardware) et de modules logiciels.

Le calculateur de supervision CS est chargé de superviser le fonctionnement du système (ici un véhicule), et en particulier de son circuit électrique CE.

Le dispositif de contrôle DC, selon l'invention, comprend au moins des moyens de contrôle MC qui surveillent la tension V mesurée aux bornes du circuit électrique CE (en amont et en aval du convertisseur CV), afin d'intervenir dès qu'une surtension ou une sous-tension est détectée. Plus précisément, les moyens de contrôle MC sont agencés, lorsqu'une surtension ou une sous-tension a été détectée dans le circuit électrique CE, pour faire fonctionner le convertisseur CV pendant une première durée d1 dans un mode qui est adapté à cette surtension ou sous-tension détectée et dans lequel il délivre une puissance qui est sensiblement identique à la puissance initiale P1 qu'il délivrait avant cette détection.

Cette puissance initiale P1 est la dernière puissance à avoir été choisie par le calculateur de supervision CS en fonction des besoins en cours du circuit électrique CE.

La tension V aux bornes du circuit électrique CE peut être fournie par l'un des capteurs de tension installés dans le circuit électrique CE, par exemple dans un organe OCj ou dans l'un des stockeurs d'énergie électrique SE1, SE2 ou dans le convertisseur CV.

Il est important de noter que l'on entend ici par « mode adapté » un mode de fonctionnement dans lequel la puissance qui est délivrée correspond à un couple (courant, tension V), où la tension V est ici la surtension ou sous-tension détectée. Ce couple peut, par exemple, être défini par une loi prédéfinie qui est connue des moyens de contrôle MCT. Par exemple, si la puissance initiale P1 est définie par un couple (C1, V1) en l'absence de surtension ou de sous-tension, alors en présence d'une surtension Vₛᵣₜ la puissance à délivrer sera définie par un couple (C2, Vₛᵣₜ), où C2 est strictement inférieur à C1 et Vₛᵣₜ est strictement supérieur à V1, et en présence d'une sous-tension Vₛₛₜ la puissance à délivrer sera définie par un couple (C3, Vₛₛₜ), où C3 est strictement supérieur à C1 et Vₛₛₜ est strictement inférieur à V1.

En cas de poursuite de la surtension ou sous-tension à l'expiration de la première durée d1, les moyens de contrôle MC sont agencés pour faire fonctionner le convertisseur CV dans un mode dégradé dans lequel il délivre une puissance qui est strictement inférieure à la puissance initiale P1.

On comprendra que s'il n'y a plus de surtension ou de sous-tension à l'expiration de la première durée d1, les moyens de contrôle MC sont agencés pour faire fonctionner le convertisseur CV dans son mode de fonctionnement normal dans lequel il délivre une puissance qui est sensiblement égale à la puissance initiale P1. Cette puissance délivrée est définie en fonction de la tension V aux bornes du circuit électrique CE et d'un courant qui est associé à cette tension V au sein d'un couple (courant, tension) qui est défini par une loi prédéfinie connue des moyens de commande MCD.

Ce mode de fonctionnement (mode adapté (sans réduction de puissance pendant d1), puis éventuellement mode dégradé), imposé par les moyens de contrôle MC, est destiné à laisser du temps au calculateur de supervision CS pour prendre des décisions sécuritaires au sein du circuit électrique CE. Ainsi, le véhicule (ou système) ne se retrouve pas subitement avec une perte totale d'alimentation électrique, puisque l'on garantit un maintien de la puissance initiale pendant une première durée d1, et les organes consommateurs d'énergie électrique OCj ne risquent pas d'être endommagés si la première durée d1 est choisie de façon appropriée. On évite ainsi les arrêts intempestifs de l'alimentation générale du circuit électrique CE, en cas de détection temporaire d'une surtension ou sous-tension pouvant éventuellement résulter d'une anomalie au sein d'un capteur ou d'un problème pendant la transmission du résultat d'une mesure de tension par un capteur.

Par exemple, dans le mode dégradé la puissance délivrée par le convertisseur CV après l'expiration de la première durée d1 peut être nulle (0). Mais d'autres choix peuvent être effectués. Ainsi, on pourrait prévoir une décroissance de la puissance délivrée par le convertisseur CV de type linéaire ou non linéaire ou par pas.

On notera que les moyens de contrôle MC peuvent être agencés pour choisir la première durée d1 en fonction d'une valeur d'un écart ΔV entre la surtension Vₛᵣₜ détectée et une valeur maximale Vₘₐₓ prédéfinie (soit ΔV = Vₛᵣₜ - Vₘₐₓ), ou d'une valeur d'un écart entre la sous-tension Vₛₛₜ détectée et une valeur minimale Vₘᵢₙ prédéfinie (soit ΔV = Vₛₛₜ - Vₘᵢₙ). Vₘₐₓ est par exemple la valeur normale de fonctionnement du circuit électrique CE. Mais il pourrait s'agir d'une valeur différente de cette valeur normale

Dans ce cas, les moyens de contrôle MC peuvent, par exemple, être agencés pour choisir une première valeur de la première durée d1 lorsque la valeur d'écart ΔV est inférieure à un premier seuil S1 (soit ΔV < S1), et une seconde valeur de la première durée d1 strictement inférieure à cette première valeur lorsque la valeur d'écart ΔV est supérieure ou égale au premier seuil S1 (soit ΔV ≥ S1). Cet exemple de choix de première et seconde valeurs de la première durée d1 est destiné à limiter autant que possible la durée (d1) pendant laquelle les organes électriques du circuit électrique CE vont demeurer exposés à une importante surtension ou sous-tension, de manière à éviter qu'ils soient endommagés. On comprendra en effet que les organes électriques peuvent généralement supporter plus longtemps une petite ou moyenne surtension ou sous-tension qu'une importante surtension ou sous-tension.

A titre d'exemple non limitatif, la première valeur de la première durée d1 peut être comprise entre 30 secondes et 3 minutes (et plus préférentiellement entre 1 minute et 2 minutes), et la seconde valeur de la première durée peut être comprise entre 200 millisecondes et 500 millisecondes (et plus préférentiellement entre 300 millisecondes et 400 millisecondes).

On a schématiquement illustré sur la figure 2 des premiers exemples de premier et second diagrammes. Le premier diagramme illustre un premier exemple d'évolution temporelle de la tension V aux bornes du circuit électrique CE en présence d'une surtension « moyenne » Vₛᵣₜ₁ passagère, c'est-à-dire décroissant rapidement. Le second diagramme illustre un premier exemple d'évolution temporelle de la puissance P fournie par le convertisseur CV du circuit électrique CE en présence de l'évolution temporelle de la tension V illustrée dans le premier diagramme. Dans ce premier exemple, à un instant t0 une surtension Vₛᵣₜ₁ est détectée, et l'écart ΔV, entre la surtension Vₛᵣₜ₁ détectée et la valeur maximale Vₘₐₓ prédéfinie (soit ΔV = Vₛᵣₜ₁ - Vₘₐₓ), est strictement inférieur au premier seuil S1 (soit (ΔV < S1). Par conséquent, les moyens de contrôle MC choisissent une première durée d1 d'une première valeur, par exemple égale à 2 minutes, pendant laquelle ils font fonctionner le convertisseur CV dans le mode adapté (et donc sans diminution de la puissance initiale P1). A l'expiration de cette première durée d1 (instant t1), les moyens de contrôle MC vérifient de nouveau la tension V en cours. Ici, cette dernière (V) est redevenue sensiblement égale à Vₘₐₓ (qui est la valeur normale de fonctionnement). Par conséquent, les moyens de contrôle MC n'interviennent pas et laissent les moyens de commande MCD faire fonctionner le convertisseur CV dans un mode normal.

On a schématiquement illustré sur la figure 3 des deuxièmes exemples de premier et second diagrammes. Le premier diagramme illustre un deuxième exemple d'évolution temporelle de la tension V aux bornes du circuit électrique CE en présence d'une surtension « importante » Vₛᵣₜ₂ passagère, c'est-à-dire décroissant moyennement rapidement. Le second diagramme illustre un deuxième exemple d'évolution temporelle de la puissance P fournie par le convertisseur CV du circuit électrique CE en présence de l'évolution temporelle de la tension V illustrée dans le premier diagramme. Dans ce deuxième exemple, à un instant t0 une surtension Vₛᵣₜ₂ est détectée, et l'écart ΔV, entre la surtension Vₛᵣₜ₂ détectée et la valeur maximale Vₘₐₓ prédéfinie (soit ΔV = Vₛᵣₜ₂ - Vₘₐₓ), est strictement supérieur au premier seuil S1 (soit (ΔV > S1). Par conséquent, les moyens de contrôle MC choisissent une première durée d1 d'une seconde valeur (strictement inférieure à la première valeur du premier exemple de la figure 2), par exemple égale à 300 millisecondes, pendant laquelle ils font fonctionner le convertisseur CV dans le mode adapté (et donc sans diminution de la puissance initiale P1). A l'expiration de cette première durée d1 (instant t1'), les moyens de contrôle MCT vérifient de nouveau la tension V en cours. Ici, cette dernière (V) n'est pas encore redevenue égale à Vₘₐₓ (qui est la valeur normale de fonctionnement) ; elle est égale à V_{srt2'} et l'écart ΔV', entre la surtension V_{srt2'} détectée et Vₘₐₓ, est strictement inférieur au premier seuil S1 (soit (ΔV' < S1). Par conséquent, les moyens de contrôle MC n'interviennent pas et laissent les moyens de commande MCD faire fonctionner le convertisseur CV dans un mode normal. On considère en effet que compte tenu de l'évolution de la surtension (décroissance rapide), elle va très prochainement disparaître.

On notera que l'on pourrait envisager que si à l'instant t1' l'écart ΔV', entre la surtension V_{srt2'} détectée et Vₘₐₓ, est toujours supérieure au premier seuil S1 (soit (ΔV' > S1), les moyens de contrôle MCT décident de faire fonctionner le convertisseur CV dans un mode dégradé (par exemple P = 0). En variante, les moyens de contrôle MCT pourraient décider de continuer à faire fonctionner le convertisseur CV dans le mode adapté (et donc sans diminution de la puissance initiale P1) pendant une seconde durée d2 d'une troisième valeur (éventuellement différente de la seconde valeur de d1). Dans ce cas, les moyens de contrôle MCT prennent une décision finale relative au mode de fonctionnement du convertisseur CV à l'expiration de la seconde durée d2.

On a schématiquement illustré sur la figure 4 des troisièmes exemples de premier et second diagrammes. Le premier diagramme illustre un troisième exemple d'évolution temporelle de la tension V aux bornes du circuit électrique CE en présence d'une surtension « moyenne » Vₛᵣₜ₃ permanente, c'est-à-dire sensiblement constante. Le second diagramme illustre un troisième exemple d'évolution temporelle de la puissance P fournie par le convertisseur CV du circuit électrique CE en présence de l'évolution temporelle de la tension V illustrée dans le premier diagramme. Dans ce troisième exemple, à un instant t0 une surtension Vₛᵣₜ₃ est détectée, et l'écart ΔV, entre la surtension Vₛᵣₜ₃ détectée et la valeur maximale Vₘₐₓ prédéfinie (soit ΔV = Vₛᵣₜ₃ - Vₘₐₓ), est strictement inférieur au premier seuil S1 (soit (ΔV < S1). Par conséquent, les moyens de contrôle MC choisissent une première durée d1 d'une première valeur, par exemple égale à 2 minutes, pendant laquelle ils font fonctionner le convertisseur CV dans le mode adapté (et donc sans diminution de la puissance initiale P1). A l'expiration de cette première durée d1 (instant t1), les moyens de contrôle MC vérifient de nouveau la tension V en cours. Ici, cette dernière (V) est toujours une surtension égale à Vₛᵣₜ₃. Par conséquent, les moyens de contrôle MC décident de faire fonctionner le convertisseur CV dans un mode dégradé. Il en résulte ici qu'après l'instant t1 le convertisseur CV ne fournit plus de puissance (P = 0).

On a schématiquement illustré sur la figure 5 des quatrièmes exemples de premier et second diagrammes. Le premier diagramme illustre un quatrième exemple d'évolution temporelle de la tension V aux bornes du circuit électrique CE en présence d'une surtension « importante » Vₛᵣₜ₄ permanente, c'est-à-dire sensiblement constante. Le second diagramme illustre un quatrième exemple d'évolution temporelle de la puissance P fournie par le convertisseur CV du circuit électrique CE en présence de l'évolution temporelle de la tension V illustrée dans le premier diagramme. Dans ce quatrième exemple, à un instant t0 une surtension Vₛᵣₜ₄ est détectée, et l'écart ΔV, entre la surtension Vₛᵣₜ₄ détectée et la valeur maximale Vₘₐₓ prédéfinie (soit ΔV = Vₛᵣₜ₄ - Vₘₐₓ), est strictement supérieur au premier seuil S1 (soit (ΔV > S1). Par conséquent, les moyens de contrôle MC choisissent une première durée d1 d'une seconde valeur, par exemple égale à 300 millisecondes, pendant laquelle ils font fonctionner le convertisseur CV dans le mode adapté (et donc sans diminution de la puissance initiale P1). A l'expiration de cette première durée d1 (instant t1'), les moyens de contrôle MC vérifient de nouveau la tension V en cours. Ici, cette dernière (V) est toujours une surtension égale à Vₛᵣₜ₄. Par conséquent, les moyens de contrôle MC décident de faire fonctionner le convertisseur CV dans un mode dégradé. Il en résulte ici qu'après l'instant t1' le convertisseur CV ne fournit plus de puissance (P = 0).

Le cas de la sous-tension est similaire à celui de la surtension illustré par les diagrammes des figures 2 à 5 décrits ci-avant. Il est ci-après illustré par les diagrammes des figures 6 à 9.

On a schématiquement illustré sur la figure 6 des premiers exemples de premier et second diagrammes. Le premier diagramme illustre un premier exemple d'évolution temporelle de la tension V aux bornes du circuit électrique CE en présence d'une sous-tension « moyenne » Vₛₛₜ₁ passagère. Le second diagramme illustre un premier exemple d'évolution temporelle de la puissance P fournie par le convertisseur CV du circuit électrique CE en présence de l'évolution temporelle de la tension V illustrée dans le premier diagramme. Dans ce premier exemple, à un instant t0 une sous-tension Vₛₛₜ₁ est détectée, et l'écart ΔV, entre la sous-tension Vₛₛₜ₁ détectée et la valeur maximale Vₘₐₓ prédéfinie (soit ΔV = Vₛₛₜ₁ - Vₘₐₓ), est strictement inférieur au premier seuil S1 (soit (ΔV < S1, par exemple avec S1 = Vₘₐₓ - Vₘᵢₙ, où Vₘᵢₙ est une valeur seuil minimale). Par conséquent, les moyens de contrôle MC choisissent une première durée d1 d'une première valeur, par exemple égale à 2 minutes, pendant laquelle ils font fonctionner le convertisseur CV dans le mode adapté (et donc ici sans diminution de la puissance initiale P1). A l'expiration de cette première durée d1 (instant t1), les moyens de contrôle MC vérifient de nouveau la tension V en cours. Ici, cette dernière (V) est redevenue sensiblement égale à Vₘₐₓ (qui est la valeur normale de fonctionnement). Par conséquent, les moyens de contrôle MC n'interviennent pas et laissent les moyens de commande MCD faire fonctionner le convertisseur CV dans un mode normal.

On a schématiquement illustré sur la figure 7 des deuxièmes exemples de premier et second diagrammes. Le premier diagramme illustre un deuxième exemple d'évolution temporelle de la tension V aux bornes du circuit électrique CE en présence d'une sous-tension « moyenne » Vₛₛₜ₂ permanente, c'est-à-dire sensiblement constante. Le second diagramme illustre un deuxième exemple d'évolution temporelle de la puissance P fournie par le convertisseur CV du circuit électrique CE en présence de l'évolution temporelle de la tension V illustrée dans le premier diagramme. Dans ce deuxième exemple, à un instant t0 une sous-tension Vₛₛₜ₂ est détectée, et l'écart ΔV, entre la sous-tension Vₛₛₜ₂ détectée et la valeur maximale Vₘₐₓ prédéfinie (soit ΔV = Vₛₛₜ₂ - Vₘₐₓ), est strictement inférieur au premier seuil S1 (soit (ΔV < S1, par exemple avec S1 = Vₘₐₓ - Vₘᵢₙ, où Vₘᵢₙ est une valeur seuil minimale). Par conséquent, les moyens de contrôle MC choisissent une première durée d1 d'une première valeur, par exemple égale à 2 minutes, pendant laquelle ils font fonctionner le convertisseur CV dans le mode adapté (et donc ici sans diminution de la puissance initiale P1). A l'expiration de cette première durée d1 (instant t1), les moyens de contrôle MC vérifient de nouveau la tension V en cours. Ici, cette dernière (V) est toujours une sous-tension égale à Vₛₛₜ₂. Par conséquent, les moyens de contrôle MC décident de faire fonctionner le convertisseur CV dans un mode dégradé. Il en résulte ici qu'après l'instant t1 le convertisseur CV ne fournit plus de puissance très rapidement (P = 0).

On a schématiquement illustré sur la figure 8 des troisièmes exemples de premier et second diagrammes. Le premier diagramme illustre un troisième exemple d'évolution temporelle de la tension V aux bornes du circuit électrique CE en présence d'une sous-tension « importante » Vₛₛₜ₃ passagère. Le second diagramme illustre un troisième exemple d'évolution temporelle de la puissance P fournie par le convertisseur CV du circuit électrique CE en présence de l'évolution temporelle de la tension V illustrée dans le premier diagramme. Dans ce troisième exemple, à un instant t0 une sous-tension Vₛₛₜ₃ est détectée, et l'écart ΔV, entre la sous-tension Vₛₛₜ₃ détectée et la valeur maximale Vₘₐₓ prédéfinie (soit ΔV = Vₛₛₜ₃ - Vₘₐₓ), est strictement supérieur au premier seuil S1 (soit (ΔV > S1, par exemple avec S1 = Vₘₐₓ - Vₘᵢₙ, où Vₘᵢₙ est une valeur seuil minimale). Par conséquent, les moyens de contrôle MC choisissent une première durée d1 d'une seconde valeur (strictement inférieure à la première valeur du premier exemple de la figure 6), par exemple égale à 300 millisecondes, pendant laquelle ils font fonctionner le convertisseur CV dans le mode adapté (et donc ici sans diminution de la puissance initiale P1). A l'expiration de cette première durée d1 (instant t1'), les moyens de contrôle MCT vérifient de nouveau la tension V en cours. Ici, cette dernière (V) est redevenue égale à Vₘₐₓ (qui est la valeur normale de fonctionnement). Par conséquent, les moyens de contrôle MC n'interviennent pas et laissent les moyens de commande MCD faire fonctionner le convertisseur CV dans un mode normal.

On a schématiquement illustré sur la figure 9 des quatrièmes exemples de premier et second diagrammes. Le premier diagramme illustre un quatrième exemple d'évolution temporelle de la tension V aux bornes du circuit électrique CE en présence d'une sous-tension « importante » Vₛₛₜ₄ permanente, c'est-à-dire sensiblement constante. Le second diagramme illustre un quatrième exemple d'évolution temporelle de la puissance P fournie par le convertisseur CV du circuit électrique CE en présence de l'évolution temporelle de la tension V illustrée dans le premier diagramme. Dans ce quatrième exemple, à un instant t0 une sous-tension Vₛₛₜ₄ est détectée, et l'écart ΔV, entre la sous-tension Vₛₛₜ₄ détectée et la valeur maximale Vₘₐₓ prédéfinie (soit ΔV = Vₛₛₜ₄ - Vₘₐₓ), est strictement supérieur au premier seuil S1 (soit (ΔV > S1, par exemple avec S1 = Vₘₐₓ - Vₘᵢₙ, où Vₘᵢₙ est une valeur seuil minimale). Par conséquent, les moyens de contrôle MC choisissent une première durée d1 d'une seconde valeur, par exemple égale à 300 millisecondes, pendant laquelle ils font fonctionner le convertisseur CV dans le mode adapté (et donc ici sans diminution de la puissance initiale P1). A l'expiration de cette première durée d1 (instant t1'), les moyens de contrôle MC vérifient de nouveau la tension V en cours. Ici, cette dernière (V) est toujours une sous-tension égale à Vₛₛₜ₄. Par conséquent, les moyens de contrôle MC décident de faire fonctionner le convertisseur CV dans un mode dégradé. Il en résulte ici qu'après l'instant t1' le convertisseur CV ne fournit plus de puissance très rapidement (P = 0).

On notera que les moyens de contrôle MC peuvent être, également et avantageusement, agencés, en cas de détection d'une surtension ou d'une sous-tension dans le circuit électrique CE, pour ordonner au générateur de courant GC de réduire l'intensité en cours du courant qu'il produit et/ou au premier stockeur d'énergie électrique SE1 de cesser de fournir de l'énergie électrique et/ou au second stockeur d'énergie électrique SE2 de cesser de fournir de l'énergie électrique et/ou à au moins un organe OCj consommateur d'énergie électrique de cesser de consommer de l'énergie électrique.

On comprendra que les moyens de contrôle MC disposent de toute la première durée d1 pour déterminer chaque action à entreprendre auprès d'au moins un organe électrique du circuit électrique CE. Ces actions sont destinées soit à faire disparaître la surtension ou sous-tension en ordonnant à l'organe électrique qui en est (ou aux organes électriques qui en sont) la cause de fonctionner dans un mode dégradé ou de cesser de fonctionner, soit d'arrêter totalement l'alimentation électrique du circuit électrique CE. On notera que les moyens de contrôle MC peuvent éventuellement décider d'associer à certaines actions un déclenchement d'un message d'alerte destiné à être affiché sur un écran du véhicule et/ou d'un signal d'alerte (visuel et/ou audio) destiné à être diffusé dans l'habitacle du véhicule. Cela permet en effet d'alerter le conducteur et éventuellement de lui expliquer l'origine du problème électrique.

On notera également que, dans l'exemple illustré non limitativement sur la figure 1, les moyens de contrôle MC comprennent des première SP1 et seconde SP2 sous-parties qui sont respectivement installées dans le convertisseur CV (et plus précisément dans ses moyens de commande MCD) et dans le calculateur de supervision CS. Ce choix, non limitatif, est destiné à optimiser les temps de réaction. En effet, la première sous-partie SP1 peut être dédiée à l'analyse des surtensions et sous-tensions dans le but de décider le plus vite possible du placement du convertisseur CV dans le mode adapté (sans réduction de puissance pendant d1), puis éventuellement dans le mode dégradé. Il est donc optimal que cette première sous-partie SP1 fasse partie du convertisseur CV, et par exemple, mais non limitativement, de ses moyens de commande MCD. Par ailleurs, la seconde sous-partie SP2 peut être dédiée à la détermination des actions à entreprendre auprès des organes électriques du circuit électrique CE. Il est donc optimal que cette seconde sous-partie SP2 fasse partie du calculateur de supervision CS, étant donné que c'est ce dernier (CS) qui supervise le fonctionnement de tous les organes électriques du circuit électrique CE.

Mais dans des variantes de réalisation les première SP1 et seconde SP2 sous-parties pourraient faire partie du seul convertisseur CV ou bien du seul calculateur de supervision CS ou encore d'un équipement dédié indépendant du convertisseur CV et du calculateur de supervision CS, mais couplé à ces derniers (CV, CS) éventuellement via un réseau de communication embarqué dans le véhicule (et éventuellement de type multiplexé).

## Revendications

1. Dispositif de contrôle (DC) pour un circuit électrique (CE) comprenant un générateur de courant (GC) connecté en parallèle à un premier stockeur d'énergie électrique (SE1), un réseau de consommation (RC) comportant au moins un organe (OCj) consommateur d'énergie électrique et connecté en parallèle à un second stockeur d'énergie électrique (SE2), et un convertisseur (CV) de type DC/DC monté en série entre, d'une part, ledit générateur de courant (GC) et ledit premier stockeur d'énergie électrique (SE1), et, d'autre part, ledit second stockeur d'énergie électrique (SE2) et ledit réseau de consommation (RC), **caractérisé en ce qu'**il comprend des moyens de contrôle (MC) agencés, en cas de détection d'une surtension ou d'une sous-tension dans ledit circuit électrique (CE), pour faire fonctionner ledit convertisseur (CV) pendant une première durée dans un mode adapté à cette surtension ou sous-tension détectée et dans lequel il délivre une puissance sensiblement identique à une puissance initiale qu'il délivrait avant ladite détection, et, en cas de poursuite de ladite surtension ou sous-tension à l'expiration de cette première durée, pour faire fonctionner ledit convertisseur (CV) dans un mode dégradé dans lequel il délivre une puissance strictement inférieure à ladite puissance initiale.

2. Dispositif selon la revendication 1, **caractérisé en ce que** dans ledit mode dégradé ladite puissance délivrée est nulle.

3. Dispositif selon l'une des revendications 1 et 2, **caractérisé en ce que** lesdits moyens de contrôle (MC) sont agencés pour choisir ladite première durée en fonction d'une valeur d'un écart entre la surtension détectée et une valeur maximale prédéfinie ou d'une valeur d'un écart entre la sous-tension détectée et une valeur minimale prédéfinie.

4. Dispositif selon la revendication 3, **caractérisé en ce que** lesdits moyens de contrôle (MC) sont agencés pour choisir une première valeur de ladite première durée lorsque ladite valeur d'écart est inférieure à un premier seuil, et une seconde valeur de ladite première durée strictement inférieure à ladite première valeur lorsque ladite valeur d'écart est supérieure ou égale audit premier seuil.

5. Dispositif selon la revendication 4, **caractérisé en ce que** ladite première valeur de la première durée est comprise entre 30 secondes et 3 minutes, et ladite seconde valeur de la première durée est comprise entre 200 millisecondes et 500 millisecondes.

6. Dispositif selon l'une des revendications 1 à 5, **caractérisé en ce que** lesdits moyens de contrôle (MC) sont agencés pour faire fonctionner ledit convertisseur (CV) pendant ladite première durée dans un mode adapté dans lequel ladite puissance qu'il délivre est fonction d'un couple (courant, tension) défini par une loi prédéfinie.

7. Dispositif selon l'une des revendications 1 à 6, **caractérisé en ce que** lesdits moyens de contrôle (MC) sont agencés, en cas de détection d'une surtension ou d'une sous-tension dans ledit circuit électrique (CE), pour ordonner audit générateur de courant (GC) de réduire une intensité en cours du courant qu'il produit et/ou audit premier stockeur d'énergie électrique (SE1) de cesser de fournir de l'énergie électrique et/ou audit second stockeur d'énergie électrique (SE2) de cesser de fournir de l'énergie électrique et/ou à au moins un organe (OCj) consommateur d'énergie électrique de cesser de consommer de l'énergie électrique.

8. Circuit électrique (CE) propre à équiper un système et comprenant un générateur de courant (GC) connecté en parallèle à un premier stockeur d'énergie électrique (SE1), un réseau de consommation (RC) comportant au moins un organe (OCj) consommateur d'énergie électrique et connecté en parallèle à un second stockeur d'énergie électrique (SE2), et un convertisseur (CV) de type DC/DC monté en série entre, d'une part, ledit générateur de courant (GC) et ledit premier stockeur d'énergie électrique (SE1), et, d'autre part, ledit second stockeur d'énergie électrique (SE2) et ledit réseau de consommation (RC), **caractérisé en ce qu'**il comprend en outre un dispositif de contrôle (DC) selon l'une des revendications précédentes.

9. Circuit électrique selon la revendication 8, **caractérisé en ce qu'**une partie au moins des moyens de contrôle (MC) dudit dispositif de contrôle (DC) fait partie dudit convertisseur (CV).

10. Véhicule, **caractérisé en ce qu'**il comprend au moins un circuit électrique (CE) selon l'une des revendications 8 et 9.

## Patentansprüche

1. Steuervorrichtung (DC) für eine elektrische Schaltung (CE) mit einem Stromgenerator (GC), der parallel zu einem ersten elektrischen Energiespeicher (SE1) geschaltet ist, einem Verbrauchernetz (RC) mit mindestens einem elektrischen Energieverbraucher (OCj), der parallel zu einem zweiten elektrischen Energiespeicher (SE2) geschaltet ist und einem DC/DC-Wandler (CV), der in Reihe zwischen einerseits dem Stromgenerator (GC) und der ersten elektrischen Energiespeichervorrichtung (SE1) und andererseits der zweiten elektrischen Energiespeichervorrichtung (SE2) und dem Verbrauchernetz (RC) angeschlossen ist **dadurch gekennzeichnet, dass** sie Steuermittel (MC) umfasst, die so beschaffen sind, dass sie im Falle der Erfassung einer Über- oder Unterspannung in der elektrischen Schaltung (CE) den Wandler (CV) für eine erste Dauer in einem Modus betreiben, der an diese erfasste Über- oder Unterspannung angepasst ist und in dem er eine Leistung abgibt, die im Wesentlichen identisch mit einer anfänglichen Leistung ist, die er vor der Erfassung abgegeben hat und im Falle des Fortbestehens der genannten Über- oder Unterspannung nach Ablauf dieser ersten Dauer den genannten Umrichter (CV) in einem degradierten Modus zu betreiben, in dem er eine Leistung abgibt, die streng unter der genannten Anfangsleistung liegt.

2. Vorrichtung nach Anspruch 1, **dadurch gekennzeichnet, dass** in dem degradierten Modus die abgegebene Leistung Null ist.

3. Vorrichtung nach einem der Ansprüche 1 und 2, **dadurch gekennzeichnet, dass** die Steuermittel (MC) so angeordnet sind, dass sie die erste Dauer in Abhängigkeit von einem Wert einer Abweichung zwischen der erfassten Überspannung und einem vordefinierten Maximalwert oder einem Wert einer Abweichung zwischen der erfassten Unterspannung und einem vordefinierten Minimalwert auswählen.

4. Vorrichtung nach Anspruch 3, **dadurch gekennzeichnet, dass** die Steuermittel (MC) angeordnet sind, um einen ersten Wert der ersten Dauer auszuwählen, wenn der Abweichungswert niedriger als ein erster Schwellenwert ist, und einen zweiten Wert der ersten Dauer, der streng niedriger als der erste Wert ist, wenn der Abweichungswert höher als oder gleich dem ersten Schwellenwert ist.

5. Vorrichtung nach Anspruch 4, **dadurch gekennzeichnet, dass** der erste Wert der ersten Dauer zwischen 30 Sekunden und 3 Minuten liegt, und der zweite Wert der ersten Dauer zwischen 200 Millisekunden und 500 Millisekunden liegt.

6. Vorrichtung nach einem der Ansprüche 1 bis 5, **dadurch gekennzeichnet, dass** die Steuermittel (MC) so angeordnet sind, dass sie den Wandler (CV) während der ersten Dauer in einem angepassten Modus betreiben, in dem die von ihm gelieferte Leistung eine Funktion eines durch ein vordefiniertes Gesetz definierten Drehmoments (Strom, Spannung) ist.

7. Vorrichtung nach einem der Ansprüche 1 bis 6, **dadurch gekennzeichnet, dass** die Steuermittel (MC) so eingerichtet sind, dass sie im Falle der Erfassung einer Überspannung oder einer Unterspannung in dem Stromkreis (CE) den Stromgenerator (GC) anzuweisen, eine Stromstärke des von ihm erzeugten Stroms zu reduzieren und/oder den ersten elektrischen Energiespeicher (SE1) anzuweisen, die Zufuhr elektrischer Energie zu stoppen und/oder den zweiten elektrischen Energiespeicher (SE2) anzuweisen, die Zufuhr elektrischer Energie zu stoppen und/oder mindestens einen elektrischen Energieverbraucher (OCj) anzuweisen, den Verbrauch elektrischer Energie zu stoppen.

8. Elektrische Schaltung (CE), die zur Ausrüstung eines Systems geeignet ist und einen Stromgenerator (GC), der parallel zu einer ersten elektrischen Energiespeichereinrichtung (SE1) geschaltet ist, und ein Verbrauchsnetz (RC), das mindestens ein elektrische Energie verbrauchendes Element (OCj) umfasst und parallel zu einer zweiten elektrischen Energiespeichereinrichtung (SE2) geschaltet ist, umfasst und einen Wandler vom Typ DC/DC (CV), der in Reihe zwischen einerseits dem Stromgenerator (GC) und der ersten elektrischen Energiespeichervorrichtung (SE1) und andererseits der zweiten elektrischen Energiespeichervorrichtung (SE2) und dem Verbrauchsnetz (RC) geschaltet ist, **dadurch gekennzeichnet, dass** sie außerdem eine Steuervorrichtung (DC) nach einem der vorhergehenden Ansprüche umfasst.

9. Elektrische Schaltung nach Anspruch 8, **dadurch gekennzeichnet, dass** zumindest ein Teil der Steuermittel (MC) der Steuervorrichtung (DC) Teil des Wandlers (CV) ist.

10. Fahrzeug, **dadurch gekennzeichnet, dass** es mindestens eine elektrische Schaltung (CE) nach einem der Ansprüche 8 und 9 umfasst.

## Claims

1. Control device (DC) for an electrical circuit (CE) comprising a current generator (GC) connected in parallel with a first electrical energy storage device (SE1), a consumption network (RC) comprising at least one electrical energy consuming element (OCj) connected in parallel with a second electrical energy storage device (SE2) and a DC/DC type converter (CV) connected in series between, on the one hand, the said current generator (GC) and the said first electrical energy storage device (SE1) and, on the other hand, the said second electrical energy storage device (SE2) and the said consumption network (RC) **characterised in that** it comprises control means (MC) arranged, in the event of detection of an overvoltage or undervoltage in the said electrical circuit (CE), to operate the said converter (CV) for a first duration in a mode adapted to this detected overvoltage or undervoltage and in which it delivers a power substantially identical to an initial power which it delivered before the said detection, and, in the event of continuation of the said overvoltage or undervoltage on expiry of this first duration, to operate the said converter (CV) in a degraded mode in which it delivers a power strictly lower than the said initial power.

2. Device according to claim 1, **characterised in that** in said degraded mode said delivered power is zero.

3. Device according to any of claims 1 and 2, **characterized in that** said control means (MC) are arranged to select said first duration as a function of a value of a deviation between the detected overvoltage and a predefined maximum value or a value of a deviation between the detected undervoltage and a predefined minimum value.

4. Device according to claim 3, **characterised in that** said control means (MC) are arranged to select a first value of said first duration when said deviation value is lower than a first threshold, and a second value of said first duration strictly lower than said first value when said deviation value is higher than or equal to said first threshold.

5. A device according to claim 4, **characterised in that** said first value of the first duration is between 30 seconds and 3 minutes, and said second value of the first duration is between 200 milliseconds and 500 milliseconds.

6. Device according to one of the claims 1 to 5, **characterised in that** said control means (MC) are arranged to operate said converter (CV) during said first duration in an adapted mode in which said power it delivers is a function of a torque (current, voltage) defined by a predefined law.

7. Device according to one of claims 1 to 6, **characterised in that** said control means (MC) are arranged, in the event of detection of an overvoltage or undervoltage in said electric circuit (CE), to to instruct said current generator (GC) to reduce a current intensity of the current it produces and/or said first electrical energy store (SE1) to stop supplying electrical energy and/or said second electrical energy store (SE2) to stop supplying electrical energy and/or at least one electrical energy consuming device (OCj) to stop consuming electrical energy.

8. Electrical circuit (CE) suitable for equipping a system and comprising a current generator (GC) connected in parallel with a first electrical energy storage device (SE1), a consumption network (RC) comprising at least one electrical energy consuming element (OCj) and connected in parallel with a second electrical energy storage device (SE2) and a DC/DC type converter (CV) connected in series between, on the one hand, said current generator (GC) and said first electrical energy storage device (SE1) and, on the other hand, said second electrical energy storage device (SE2) and said consumption network (RC), **characterised in that** it further comprises a control device (DC) according to one of the preceding claims.

9. The electric circuit according to claim 8, **characterized in that** at least part of the control means (MC) of said control device (DC) is part of said converter (CV).

10. Vehicle, **characterized in that** it comprises at least one electric circuit (CE) according to one of claims 8 and 9.
